# FASCICULE DE BREVET EUROPEEN

(11) **EP 3 393 822 B1**
(45) Date de publication et mention de la délivrance du brevet: **30.10.2019**
(21) Numéro de dépôt: 16822998.7
(22) Date de dépôt: 21.12.2016
(51) Int. Cl.: C08L 9/06, C08K 3/04, B60C 1/00, C08K 5/3415, C08K 5/00

(54) **BANDE DE ROULEMENT COMPRENANT AU MOINS UN CHÉLATE MÉTALLIQUE ET/OU UN PIGMENT**
REIFENLAUFFLÄCHE MIT MINDESTENS EINEM METALLCHELAT UND/ODER PIGMENT
TIRE TREAD COMPRISING AT LEAST ONE METAL CHELATE AND/OR A PIGMENT

(30) Priorité: 22.12.2015 FR 1563091
(43) Date de publication de la demande: 31.10.2018
(73) Titulaire: Compagnie Générale des Etablissements Michelin, 63000 Clermont-Ferrand (FR)
(72) Inventeur: LEBRUN, Xavier, 63040 Clermont-ferrand Cedex 09 (FR); VASSEUR, Didier, 63040 Clermont-ferrand Cedex 09 (FR)
(74) Mandataire: Sidhu, Alban
(86) Numéro de dépôt international: PCT/EP2016/082230
(87) Numéro de publication internationale: WO 2017/108985

(56) Documents cités:
- EP-A1- 1 055 702
- WO-A1-00/43213
- WO-A1-2005/049724
- WO-A1-2015/055510
- US-A1- 2007 051 447
- US-A1- 2007 054 993
- DATABASE WPI Week 201358 Thomson Scientific, London, GB; AN 2013-M40404 XP002760537, -& JP 2013 159677 A (BRIDGESTONE CORP) 19 août 2013 (2013-08-19)

## Description

La présente invention se rapporte à une bande de roulement de pneumatique à base d'un élastomère diénique, d'une charge renforçante, d'un système de réticulation et d'un composé particulier.

Les concepteurs de pneumatiques doivent respecter un cahier des charges strict qui fixe un grand nombre d'exigences techniques, souvent antinomiques. Les bandes de roulement doivent notamment présenter une faible résistance au roulement, une résistance élevée à l'usure ainsi qu'une adhérence élevée, en particulier sur route mouillée ou humide. L'amélioration combinée de ces propriétés reste une préoccupation constante chez les concepteurs.

En particulier, l'amélioration de l'adhérence permet aux pneumatiques un démarrage sans patinage, et des distances de freinage plus courtes, ce qui améliore la sécurité d'utilisation de ces pneumatiques.

Dans ce but, la demanderesse a découvert qu'une nouvelle bande de roulement de pneumatique à base d'une composition comprenant un composé particulier permettait d'obtenir une performance d'adhérence très améliorée en particulier en ce qui concerne les performances de freinage.

L'invention a donc pour objet une bande de roulement de pneumatique à base d'un ou plusieurs élastomère(s) diénique(s), d'une ou plusieurs charge(s) renforçante(s), d'un système de réticulation, et d'au moins un composé A choisi parmi un chélate métallique comprenant au moins un ligand et au moins un métal, un pigment et leur mélange,
ledit chélate métallique étant choisi parmi les porphyrines de fer, de préférence les porphines de fer, l'hémiporphyrazine de fer, l'hémine de fer et les phtalocyanines de fer,
ledit pigment étant choisi parmi les dikétopyrrolopyrroles, les anthraquinones, les quinacridones, les pérylènes et les pyrazolo-quinazolones, de préférence les dikétopyrrolopyrroles,
ledit composé (A) représentant de 1 à 30 pce.

L'invention a également pour objet un procédé de préparation de la bande de roulement selon l'invention.

Un autre objet de l'invention est un pneumatique comprenant la bande de roulement selon l'invention.

L'invention ainsi que ses avantages seront aisément compris à la lumière de la description et des exemples de réalisations qui suivent.

Comme expliqué précédemment, la bande de roulement selon l'invention est à base d'un ou plusieurs élastomère(s) diénique(s), d'une ou plusieurs charge(s) renforçante(s), d'un système de réticulation, et d'au moins un composé A.

Par l'expression bande de roulement « à base de », il faut entendre, au sens de l'invention, une bande de roulement comportant le mélange et/ou le produit de réaction des différents constituants utilisés, certains de ces constituants de base étant susceptibles de, ou destinés à réagir entre eux, au moins en partie, lors des différentes phases de fabrication de la bande de roulement.

Dans la présente description, sauf indication expresse différente, tous les pourcentages (%) sont des pourcentages massiques.

D'autre part, tout intervalle de valeurs désigné par l'expression "entre a et b" représente le domaine de valeurs allant de plus de a à moins de b (c'est-à-dire bornes a et b exclues), tandis que tout intervalle de valeurs désigné par l'expression "de a à b" signifie le domaine de valeurs allant de a jusqu'à b (c'est-à-dire incluant les bornes strictes a et b).

Dans la présente demande, on entend par « partie pour cent d'élastomère » ou « pce », la partie en poids d'un constituant pour 100 parties en poids du ou des élastomères c'est-à-dire du poids total du ou des élastomères. Ainsi, un constituant à 60 pce signifiera par exemple 60 g de ce constituant pour 100 g d'élastomère.

On entend par « chélate métallique », au sens de la présente invention et de manière connue en soi, une espèce chimique comprenant un cation métallique lié par au moins deux groupements donneurs portés par un seul ligand.

On entend par « pigment », au sens de la présente invention, toute entité organique et/ou minérale dont la solubilité dans l'eau est inférieure à 0,01 % à 20 °C, de préférence inférieure à 0,0001 %, et présentant une absorption entre 350 et 700 nm, de préférence une absorption avec un maximum.

Le chélate métallique est choisi parmi les porphyrines de fer, de préférence les porphines de fer, l'hémiporphyrazine de fer, l'hémine de fer, et les phtalocyanines de fer.

Selon un mode de réalisation particulier de l'invention, ledit chélate métallique est l'hémine de fer de formule (I) suivante : 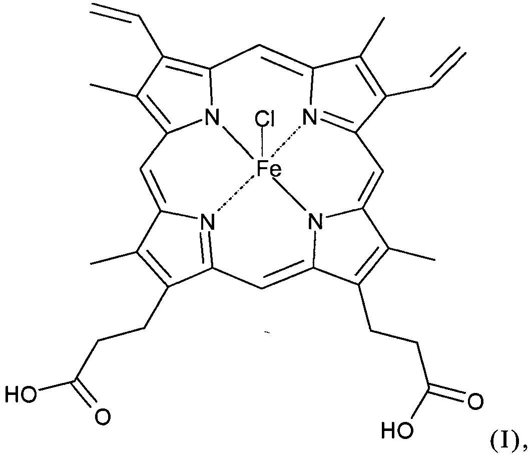 ou la phtalocyanine de fer de formule (II) suivante :

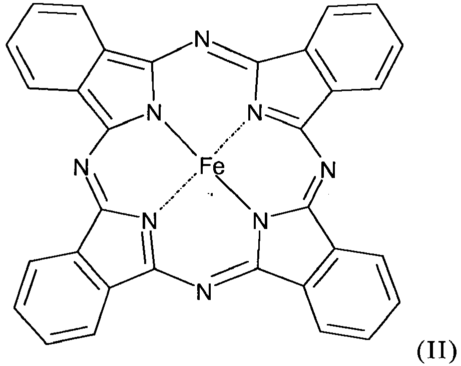

Le pigment est choisi parmi les dikétopyrrolopyrroles, les anthraquinones, les quinacridones, les pérylènes et les pyrazolo-quinazolones, de préférence les dikétopyrrolopyrroles.

De préférence, le pigment est choisi parmi le Red 254, le Red 255 et le Red 264, de préférence le Red 254.

Selon un mode de réalisation particulier de l'invention, le pigment est différent du chélate métallique tel que défini précédemment.

Le composé A représente de 1 à 30 pce, de préférence de 5 à 20 pce.

Par élastomère diénique, doit être compris de manière connue un élastomère issu au moins en partie, c'est-à-dire un homopolymère ou un copolymère, de monomères diènes.

De manière connue en soi, un monomère diène est un monomère comprenant deux doubles liaisons carbone-carbone, conjuguées ou non.

Le ou les élastomères diéniques de la bande de roulement selon l'invention peuvent être classés dans deux catégories : « essentiellement insaturés » ou « essentiellement saturés ».

On entend en général par « essentiellement insaturé », un élastomère diénique issu au moins en partie de monomères diènes conjugués, ayant un taux de motifs ou unités issues d'un diène conjugué qui est supérieur à 15 % en moles.

On entend en particulier par élastomère diénique « fortement insaturé » un élastomère diénique ayant un taux de motifs ou unités issues d'un diène conjugué qui est supérieur à 50 % en moles.

A l'inverse, on entend en général par « essentiellement saturé », un élastomère diénique issu au moins en partie de monomères diènes conjugués, ayant un taux de motifs ou unités issues d'un diène conjugué qui est inférieur ou égal à 15 % en moles.

C'est ainsi que des élastomères diéniques tels que certains caoutchoucs butyles ou les copolymères de diènes et d'alpha-oléfines type EPDM peuvent être qualifiés d'élastomères diéniques « essentiellement saturés ».

De manière préférée, le ou les élastomères diéniques de la bande de roulement selon l'invention sont choisis parmi les élastomères diéniques essentiellement insaturés, et les mélanges de ces élastomères.

On entend plus particulièrement par élastomère diénique essentiellement insaturé :
(a) tout homopolymère obtenu par polymérisation d'un monomère diène conjugué ayant de 4 à 12 atomes de carbone ;
(b) tout copolymère obtenu par copolymérisation d'un ou plusieurs diènes conjugués entre eux ou avec un ou plusieurs composés vinyles aromatiques ayant de 8 à 20 atomes de carbone ;
(c) un copolymère ternaire obtenu par copolymérisation d'éthylène, d'une α-oléfine ayant de 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment le 1,4-hexadiène, l'éthylidène norbornène, le dicyclopentadiène,
(d) les mélanges de ces polymères.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinyles aromatiques conviennent par exemple le styrène, l'ortho-, méta-, para-méthylstyrène, le mélange commercial « vinyle-toluène », le para-tertiobutylstyrène, les méthoxystyrènes, les chlorostyrènes, le vinylmésitylène, le divinylbenzène, le vinylnaphtalène.

Lorsque le ou les élastomères diéniques essentiellement insaturés sont choisis parmi les copolymères obtenus par copolymérisation d'un ou plusieurs diènes conjugués entre eux ou avec un ou plusieurs composés vinyles aromatiques ayant de 8 à 20 atomes de carbone, ceux-ci peuvent contenir entre 99 % et 20 % en poids d'unités diéniques conjugués et entre 1 % et 80 % en poids d'unités vinyles aromatiques.

Les élastomères diéniques de la bande de roulement selon l'invention peuvent avoir toute microstructure qui est fonction des conditions de polymérisation utilisées, notamment de la présence ou non d'un agent modifiant et/ou randomisant et des quantités d'agent modifiant et/ou randomisant employées.

Les élastomères diéniques de la bande de roulement selon l'invention peuvent par exemple être préparés en dispersion ou en solution ; ils peuvent être couplés et/ou étoilés ou encore fonctionnalisés avec un agent de couplage et/ou d'étoilage ou de fonctionnalisation. Pour un couplage avec du noir de carbone, on peut citer par exemple des groupes fonctionnels comprenant une liaison C-Sn ou des groupes fonctionnels aminés tels que la benzophénone par exemple ; pour un couplage à une charge inorganique renforçante telle que la silice, on peut citer par exemple des groupes fonctionnels silanol ou polysiloxane ayant une extrémité silanol (tels que décrits par exemple dans FR 2 740 778 ou US 6,013,718), des groupes alkoxysilane (tels que décrits par exemple dans FR 2 765 882 ou US 5,977,238), des groupes carboxyliques (tels que décrits par exemple dans WO 01/92402 ou US 6,815,473, WO 2004/096865 ou US 2006/0089445) ou encore des groupes polyéthers (tels que décrits par exemple dans EP 1 127 909 ou US 6,503,973).

Comme autres exemples d'élastomères fonctionnalisés, on peut citer également des élastomères (tels que SBR, BR, NR ou IR) du type époxydés.

A titre d'élastomère diénique de la bande de roulement selon l'invention, conviennent les polybutadiènes et en particulier ceux ayant une teneur (% molaire) en unités -1,2 comprise entre 4 % et 80 % ou ceux ayant une teneur (% molaire) en cis-1,4 supérieure à 80 %, les polyisoprènes, les copolymères de butadiène-styrène et en particulier ceux ayant une température de transition vitreuse, Tg, (mesurée selon ASTM D3418) comprise entre 0°C et -70°C et plus particulièrement entre -10°C et -60°C, une teneur en styrène comprise entre 5 % et 60 % en poids et plus particulièrement entre 20 % et 50 %, une teneur (% molaire) en liaisons -1,2 de la partie butadiénique comprise entre 4 % et 75 %, une teneur (% molaire) en liaisons trans-1,4 comprise entre 10 % et 80 %, les copolymères de butadiène-isoprène et notamment ceux ayant une teneur en isoprène comprise entre 5 % et 90 % en poids et une Tg de -40°C à -80°C, les copolymères isoprène-styrène et notamment ceux ayant une teneur en styrène comprise entre 5 % et 50 % en poids et une Tg comprise entre - 25°C et -50°C. Dans le cas des copolymères de butadiène-styrène-isoprène, conviennent notamment ceux ayant une teneur en styrène comprise entre 5 % et 50 % en poids, et plus particulièrement comprise entre 10 % et 40 %, une teneur en isoprène comprise entre 15 % et 60 % en poids, et plus particulièrement entre 20 % et 50 %, une teneur en butadiène comprise entre 5 % et 50 % en poids, et plus particulièrement comprise entre 20 % et 40 %, une teneur (% molaire) en unités -1,2 de la partie butadiénique comprise entre 4 % et 85 %, une teneur (% molaire) en unités trans -1,4 de la partie butadiénique comprise entre 6 % et 80 %, une teneur (% molaire) en unités -1,2 plus -3,4 de la partie isoprénique comprise entre 5 % et 70 % et une teneur (% molaire) en unités trans -1,4 de la partie isoprénique comprise entre 10 % et 50 %, et plus généralement tout copolymère butadiène-styrène-isoprène ayant une Tg comprise entre -20°C et -70°C.

Le ou les élastomères diéniques de la bande de roulement selon l'invention peuvent être tout particulièrement choisis parmi les élastomères isoprèniques.

Par « élastomère isoprènique », on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

Parmi les copolymères d'isoprène, on citera en particulier les copolymères d'isoprène-styrène (SIR), d'isoprène-butadiène (BIR) ou d'isoprène-butadiène-styrène (SBIR).

De manière préférée, les élastomères isopréniques sont choisis parmi le caoutchouc naturel et le polyisoprène cis-1,4 de synthèse.

Parmi les polyisoprènes de synthèse, sont utilisés de préférence les polyisoprènes ayant un taux (% molaire) de liaisons cis-1,4 supérieur à 90 %, plus préférentiellement encore supérieur à 98 %.

De manière préférée, le ou les élastomères diéniques de la bande de roulement selon l'invention sont choisis parmi les homopolymères obtenus par polymérisation d'un monomère diène conjugué ayant de 4 à 12 atomes de carbone, les copolymères obtenus par copolymérisation d'un ou plusieurs monomères diènes conjugués entre eux ou avec un ou plusieurs composés vinyles aromatiques ayant de 8 à 20 atomes de carbone, et les mélanges de ces polymères.

De manière particulièrement préférée, le ou les élastomères diéniques sont choisis parmi les polybutadiènes (en abrégé « BR »), le caoutchouc naturel (NR), les polyisoprènes de synthèse (IR), les copolymères de butadiène, les copolymères d'isoprène et les mélanges de ces élastomères. On peut citer en particulier les copolymères de butadiène-styrène (SBR), les copolymères d'isoprène-butadiène (BIR), les copolymères d'isoprène-styrène (SIR) et les copolymères d'isoprène-butadiène-styrène (SBIR).

La teneur en élastomères diéniques dans la bande de roulement selon l'invention varie généralement de 50 à 100 pce, de préférence de 70 à 100 pce et, plus préférentiellement, tous les élastomères de la bande de roulement sont des élastomères diéniques (100 pce).

Comme énoncé précédemment, la bande de roulement selon l'invention comprend également un système de réticulation.

Le système de réticulation peut être un système de vulcanisation. Dans ce cas, il est préférentiellement à base de soufre ou à base d'un donneur de soufre et d'un accélérateur primaire de vulcanisation.

Parmi les donneurs de soufre on peut citer par exemple les alkyl phénol disulfures (APDS) tel que par exemple le disulfure de para-tertiobutylphénol.

Le soufre est utilisé à un taux préférentiel allant de 0,5 à 10 pce, plus préférentiellement allant de 0,5 à 5 pce, en particulier de 0,5 à 3 pce.

On peut utiliser comme accélérateur primaire tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé « MBTS »), N-cyclohexyl-2-benzothiazyle sulfénamide (en abrégé « CBS »), N,N-dicyclohexyl-2-benzothiazyle sulfénamide (en abrégé « DCBS »), N-ter-butyl-2-benzothiazyle sulfénamide (en abrégé « TBBS »), N-ter-butyl-2-benzothiazyle sulfénimide (en abrégé « TBSI »), dibenzyldithiocarbamate de zinc (en abrégé « ZBEC ») et les mélanges de ces composés.

De préférence, on utilise un accélérateur primaire du type sulfénamide.

L'accélérateur primaire de vulcanisation doit permettre une réticulation des bandes de roulement dans des temps industriellement acceptables, tout en préservant un délai minimum de sécurité (« temps de grillage ») au cours duquel les bandes de roulement peuvent être mises en forme sans risque de vulcanisation prématurée (« grillage »).

A ce système de vulcanisation de base peuvent venir s'ajouter divers accélérateurs secondaires ou activateurs de vulcanisation connus tels qu'oxyde de zinc, acide stéarique ou composés équivalents, dérivés guanidiques (en particulier diphénylguanidine).

La teneur de chaque accélérateur primaire ou secondaire de vulcanisation et de chaque activateur de vulcanisation varie généralement de 0,5 à 5,0 pce.

La bande de roulement selon l'invention comprend en outre au moins une charge renforçante.

On peut utiliser tout type de charge renforçante connue pour ses capacités à renforcer une bande de roulement, par exemple une charge organique tel que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à l'élastomère isoprènique sous la forme d'un masterbatch (voir par exemple demandes WO 97/36724 ou WO 99/16600).

Comme exemples de charges organiques autres que des noirs de carbone, on peut citer les charges organiques de polyvinyle aromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu, on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃).

De préférence, la ou les charges renforçantes sont choisies parmi la silice, le noir de carbone et leur mélange, et de préférence encore la charge renforçante est du noir de carbone.

De manière préférentielle, la ou les charges renforçantes (noir de carbone et/ou charge inorganique renforçante telle que silice) sont présentes à un taux allant de 20 à 200 pce, de préférence de 30 à 150 pce, de préférence encore de 40 à 80 pce.

L'optimum est de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids Lourd.

Selon un mode de réalisation de l'invention, on utilise une charge renforçante comportant entre 30 et 150 pce, plus préférentiellement entre 30 et 120 pce de charge organique, particulièrement du noir de carbone.

Lorsque la charge renforçante comprend une charge nécessitant l'utilisation d'un agent de couplage pour établir la liaison entre la charge et l'élastomère diénique, la bande de roulement comprend en outre, de manière classique, un agent susceptible d'assurer efficacement cette liaison. Lorsque la silice est présente dans la bande de roulement à titre de charge renforçante, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits « symétriques » ou « asymétriques » selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits « symétriques » répondant à la formule générale (II) suivante :

Z - A - Sx - A - Z (II)

dans laquelle :
- x est un entier de 2 à 8, de préférence de 2 à 5 ;
- A est un radical hydrocarboné divalent, de préférence des groupements alkylène en C₁-C₁₈ ou des groupements arylène en C₆-C₁₂, plus particulièrement des alkylènes en C₁-C₁₀, notamment en C₁-C₄, en particulier le propylène ;
- Z répond à l'une des formules ci-après : 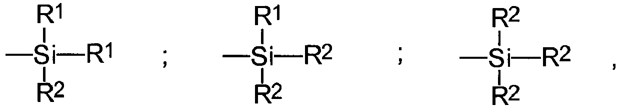 dans lesquelles :
   - les radicaux R¹, substitués ou non substitués, identiques ou différents entre eux, représentent un groupe alkyle en C₁-C₁₈, cycloalkyle en C₅-C₁₈ ou aryle en C₆-C₁₈, de préférence représentent des groupes alkyle en C₁-C₆, cyclohexyle ou phényle, notamment des groupes alkyle en C₁-C₄, et plus particulièrement représentent le méthyle et/ou l'éthyle,
   - les radicaux R², substitués ou non substitués, identiques ou différents entre eux, représentent un groupe alkoxyle en C₁-C₁₈ ou cycloalkoxyle en C₅-C₁₈, de préférence représentent un groupe choisi parmi alkoxyles en Ci-Cs et cycloalkoxyles en C₅-C₈, plus préférentiellement encore représentent un groupe choisi parmi alkoxyles en C₁-C₄, et en particulier représentent un groupe méthoxyle et éthoxyle.

Dans le cas d'un mélange d'alkoxysilanes polysulfurés répondant à la formule (II) ci-dessus, notamment des mélanges usuels disponibles commercialement, la valeur moyenne des « x » est un nombre fractionnaire de préférence allant de 2 à 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R² = OH dans la formule I ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533 et WO 2006/125534.

Dans la bande de roulement selon l'invention, la teneur en agent de couplage varie préférentiellement de 0,5 à 12 pce, étant entendu qu'il est en général souhaitable d'en utiliser le moins possible. La présence de l'agent de couplage dépend de celle de la charge inorganique renforçante autre que du noir de carbone. Son taux est aisément ajusté par l'homme du métier selon le taux de cette charge ; il est typiquement de l'ordre de 0,5 à 15 % en poids par rapport à la quantité de charge inorganique renforçante autre que du noir de carbone.

L'homme du métier comprendra qu'à titre de charge équivalente de la charge inorganique renforçante autre que noir de carbone, pourrait être utilisée une charge renforçante d'une autre nature, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et les élastomères diéniques.

La bande de roulement selon l'invention peut également comprendre des charges organiques renforçantes qui peuvent remplacer tout ou partie des noirs de carbone ou des autres charges inorganiques renforçantes décrites plus haut. Comme exemples de charges organiques renforçantes autres que du noir de carbone, on peut citer les charges organiques de polyvinyle fonctionnalisées telles que décrites dans les demandes WO-A-2006/069792, WO-A-2006/069793, WO-A-2008/003434 et WO-A-2008/003435.

La bande de roulement selon l'invention peut comporter divers additifs usuellement connus de l'homme du métier. On citera par exemple des charges non renforçantes ou inertes, des plastifiants, des résines tackifiantes, des agents de protection tels que antioxydants ou antiozonants, anti-UV, divers agents de mise en œuvre ou autres stabilisants, ou encore des promoteurs aptes à favoriser l'adhésion au reste de la structure de l'objet pneumatique.

Dans le cas où la bande de roulement comprend un plastifiant, la teneur est préférentiellement inférieure à 100 pce, et plus préférentiellement pour une application en sous-couche de bande de roulement, la teneur en plastifiant est inférieure à 20 pce, plus préférentiellement inférieure à 10 pce.

L'invention a également pour objet un procédé de préparation de la bande de roulement selon l'invention comprenant les étapes suivantes :
a) incorporer à l'élastomère diénique ou auxdits élastomères diéniques ledit composé A et la ou les charge(s) renforçante(s), en malaxant thermomécaniquement le tout, en une ou plusieurs fois, jusqu'à atteindre une température maximale allant de 110°C à 165°C, puis
b) incorporer au mélange le système de réticulation et malaxer le tout jusqu'à une température maximale inférieure à 90°C.

Alternativement, le composé A peut être incorporé au cours de l'étape b) ci-dessus.

De manière préférée, ledit procédé comprend en outre une étape c) de calandrage du mélange obtenu à l'issue de l'étape b).

La bande de roulement selon l'invention est généralement fabriquée dans des mélangeurs appropriés, en utilisant tout d'abord deux phases de préparation successives bien connues de l'homme du métier : une première phase de travail ou malaxage thermomécanique (phase dite "non-productive") à haute température, jusqu'à une température maximale comprise entre 110°C et 165°C, de préférence entre 130°C et 165°C, suivie d'une seconde phase de travail mécanique (phase dite "productive") jusqu'à une plus basse température, typiquement inférieure à 90°C, par exemple entre 40°C et 90°C, phase de finition au cours de laquelle est incorporé le système de réticulation.

La bande de roulement est ensuite obtenue par calandrage.

L'invention porte également sur un pneumatique comprenant une bande de roulement telle que précédemment et aussi sur l'utilisation de ladite bande de roulement pour améliorer l'adhérence d'un pneumatique tel que défini précédemment, sur route mouillée.

### EXEMPLES

### Tests utilisés

Performance d'adhérence en freinage sur sol mouillé :
Les compositions ci-dessous (A, B et C) sont utilisées comme bandes de roulement de pneumatiques tourisme à carcasse radiale. Les pneumatiques sont notés respectivement P-A (pneus témoins), P-B et P-C (pneus selon l'invention), de dimensions 225/55R16, conventionnellement fabriqués et en tous points identiques hormis les compositions de caoutchouc constitutives de leur bande de roulement. Les pneumatiques sont montés, à l'avant et à l'arrière, sous pression de gonflage nominale, sur un véhicule automobile de marque " BMW ", modèle 530, équipé d'un système ABS.

Les pneumatiques sont soumis à un test de freinage sur sol mouillé à deux vitesses différentes (à 90 km/h et à 30 km/h) consistant à mesurer la distance nécessaire pour passer de 90 km/h (ou 30 km/h selon le cas) à l'arrêt lors d'un freinage brutal en ligne droite, sur béton bitumineux avec un film d'1 mm d'eau, à température ambiante. Une valeur supérieure à celle du témoin, arbitrairement fixée à 100, indique un résultat amélioré, c'est-à-dire une distance de freinage plus courte. Les résultats obtenus sont indiqués dans le tableau 2 ci-dessous.

### Préparation des bandes de roulement

### 1) Procédé de préparation des bandes de roulement

Les mélanges pour bandes de roulement sont préparés dans des mélangeurs appropriés, en utilisant deux phases de préparation successives selon une procédure générale bien connue de l'homme du métier.

On introduit dans un mélangeur interne, rempli à 70% et dont la température initiale de cuve est d'environ 90°C, le ou les élastomères diéniques, le pigment ou le chélate métallique éventuels, la ou les charges renforçantes, puis, après une à deux minutes de malaxage, les divers autres ingrédients à l'exception du système de réticulation. On conduit alors un travail thermomécanique (phase non-productive) en une étape (durée totale du malaxage égale à environ 5 min), jusqu'à atteindre une température maximale de "tombée" d'environ 165°C. On récupère le mélange ainsi obtenu, on le refroidit puis on ajoute le système de réticulation sur un mélangeur externe (homo-finisseur) à 70°C, en mélangeant le tout (phase productive) pendant environ 5 à 6 min

Ici, la mise en œuvre est effectuée au moyen d'un mélangeur du type Haake RM 3000 de 360 cm³ avec des palettes de type CAM.

Les mélanges ainsi obtenus sont ensuite calandrés sous la forme de bande de roulement.

### 2) Formulation des bandes de roulement

Deux bandes de roulement selon l'invention (bandes de roulement B et C) et une bande de roulement comparative (bande de roulement A) ont été préparées à partir des ingrédients et des teneurs présentés dans le tableau 1 ci-dessous. Les teneurs sont exprimées en pce.

**Tableau 1**

| **Bande de roulement** | A (Comp) | **B (Inv)** | **C (Inv)** |
|---|---|---|---|
| Caoutchouc naturel | 40 | 40 | 40 |
| Caoutchouc styrène butadiène⁽¹⁾ | 40 | 40 | 40 |
| Caoutchouc butadiène⁽²⁾ | 20 | 20 | 20 |
| Noir de carbone⁽³⁾ | 54 | 54 | 54 |
| Acide stéarique | 2 | 2 | 2 |
| ZnO | 2 | 2 | 2 |
| Antioxydant⁽¹⁾ | 2 | 2 | 2 |
| Soufre | 1,1 | 1,1 | 1,1 |
| Accélérateur de vulcanisation⁽⁵⁾ | 1,1 | 1,1 | 1,1 |
| Paraffine | 1 | 1 | 1 |
| Pigment⁽⁶⁾ | - | **10** | - |
| Chélate métallique⁽⁷⁾ | - | - | **10** |

| | | | |
|---|---|---|---|
| (1) copolymère styrène-butadiène, (2) Polybutadiène avec 4% de motifs 1,2 et 93% de motifs 1,4 cis (Tg = -106°C), (3) noir de carbone N234, (4) N-(1,3-diméthylbutyl)-N'-phényl-p-phénylènediamine « 6-PPD » de la société Flexsys, (5) N-cyclohexyl-2-benzothiazol-sulfénamide « Santocure CBS » de la société Flexsys. (6) RED 254 (7) HEMINE | | | |

### Résultats

Les propriétés mécaniques sont présentées dans le tableau 2.

**Tableau 2**

| **Bande de roulement** | A (Comp) | **B (Inv)** | **C (Inv)** |
|---|---|---|---|
| Freinage 30 km/h | 100 | 105 | 105 |
| Freinage 90 km/h | 100 | 102 | 101 |

Les résultats présentés, dans le tableau 2 ci-dessus mettent en évidence que les bandes de roulement B et C selon l'invention permettent une amélioration notable du freinage à basse vitesse, et à haute vitesse des pneus P-B et P-C les contenant.

## Revendications

1. Bande de roulement de pneumatique à base d'un ou plusieurs élastomère(s) diénique(s), d'une ou plusieurs charge(s) renforçante(s), d'un système de réticulation, **caractérisée en ce que** ladite bande de roulement comprend en outre au moins un composé (A) choisi parmi un chélate métallique comprenant au moins un ligand et au moins un métal, un pigment et leur mélange,
ledit chélate métallique étant choisi parmi les porphyrines de fer, de préférence les porphines de fer, l'hémiporphyrazine de fer, l'hémine de fer et les phtalocyanines de fer,
ledit pigment étant choisi parmi les dikétopyrrolopyrroles les anthraquinones les quinacridones les pérylènes et les pyrazolo-quinazolones de préférence les dikétopyrrolopyrroles
ledit composé (A) représentant de 1 à 30 pce.

2. Bande de roulement selon l'une quelconque des revendications précédentes, **caractérisée en ce que** le chélate métallique est l'hémine de fer de formule (I) suivante : 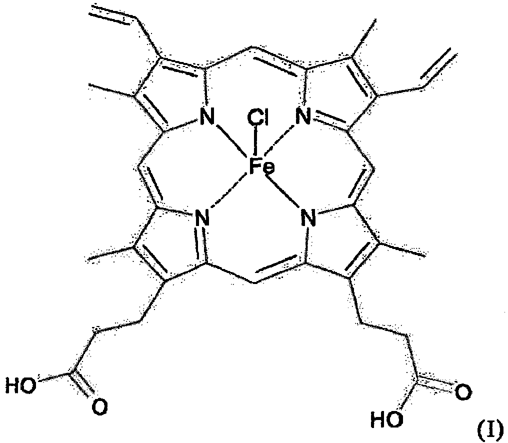 ou la phtalocyanine de fer de formule (II) suivante :

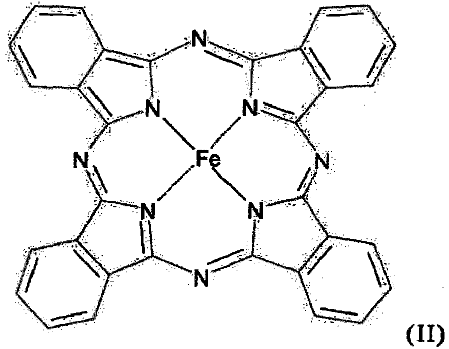

3. Bande de roulement selon l'une quelconque des revendications précédentes, **caractérisée en ce que** le pigment est choisi parmi le Red 254, le Red 255 et le Red 264, de préférence le Red 254.

4. Bande de roulement selon l'une quelconque des revendications précédentes, **caractérisée en ce que** le composé (A) représente de 5 à 20 pce.

5. Bande de roulement selon l'une quelconque des revendications précédentes, **caractérisée en ce que** le ou les élastomères diéniques sont choisis parmi les polybutadiènes, le caoutchouc naturel, les polyisoprènes de synthèse, les copolymères de butadiène, les copolymères d'isoprène et les mélanges de ces élastomères.

6. Bande de roulement selon l'une quelconque des revendications précédentes, **caractérisée en ce que** la ou les charges renforçantes sont choisies parmi la silice, le noir de carbone et leur mélange, de préférence le noir de carbone.

7. Bande de roulement selon l'une quelconque des revendications précédentes, **caractérisée en ce que** la ou les charges renforçantes sont présentes à un taux allant de 20 à 200 pce, de préférence de 30 à 150 pce, de préférence encore de 40 à 80 pce.

8. Procédé de préparation d'une bande de roulement telle que définie à l'une quelconque des revendications précédentes, **caractérisé en ce qu'**il comprend les étapes suivantes :
a) incorporer à l'élastomère diénique ou auxdits élastomères diéniques ledit composé (A) et la ou les charge(s) renforçante(s), en malaxant thermomécaniquement le tout, en une ou plusieurs fois, jusqu'à atteindre une température maximale allant de 110°C à 165°C, puis
b) incorporer au mélange le système de réticulation et malaxer le tout jusqu'à une température maximale inférieure à 90°C.

9. Procédé selon la revendication 8, **caractérisé en ce qu'**il comprend en outre une étape c) de calandrage du mélange obtenu à l'issue de l'étape b).

10. Pneumatique comprenant une bande de roulement telle que définie à l'une quelconque des revendications 1 à 7.

11. Utilisation de la bande de roulement telle que définie à l'une quelconque des revendications 1 à 7 pour améliorer l'adhérence d'un pneumatique, tel que défini à la revendication 10, sur route mouillée.

## Patentansprüche

1. Reifenlauffläche auf Basis von einem oder mehreren Dienelastomeren, einem oder mehreren verstärkenden Füllstoffen und einem Vernetzungssystem, **dadurch gekennzeichnet, dass** die Lauffläche außerdem mindestens eine Verbindung (A) umfasst, die aus einem Metallchelat mit mindestens einem Liganden und mindestens einem Metall, einem Pigment und einer Mischung davon ausgewählt ist,
wobei das Metallchelat aus Eisenporphyrinen, vorzugsweise Eisenporphinen, Eisenhemiporphyrazin, Eisenhämin und Eisenphthalocyaninen ausgewählt ist,
wobei das Pigment aus Diketopyrrolopyrrolen, Anthrachinonen, Chinacridonen, Perylenen und Pyrazolochinazolonen, vorzugsweise Diketopyrrolopyrrolen, ausgewählt ist,
wobei die Verbindung (A) 1 bis 30 phe ausmacht.

2. Lauffläche nach einem der vorhergehenden Ansprüche, **dadurch gekennzeichnet, dass** es sich bei dem Metallchelat um Eisenhämin der folgenden Formel (I): 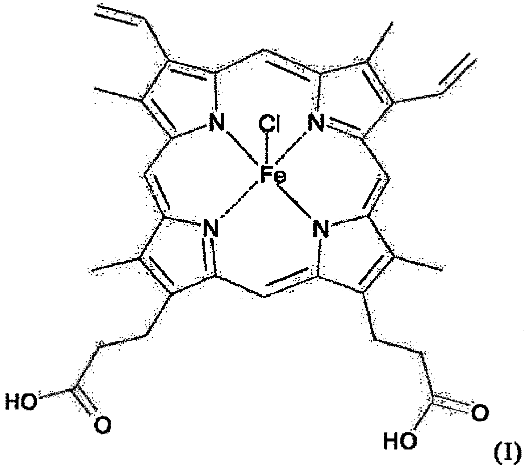 oder Eisenphthalocyanin der folgenden Formel (II): 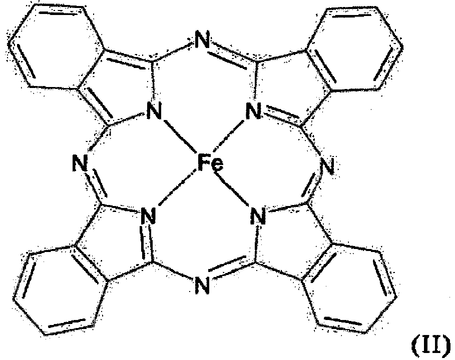 handelt.

3. Lauffläche nach einem der vorhergehenden Ansprüche, **dadurch gekennzeichnet, dass** das Pigment aus Red 254, Red 255 und Red 264, vorzugsweise Red 254, ausgewählt ist.

4. Lauffläche nach einem der vorhergehenden Ansprüche, **dadurch gekennzeichnet, dass** die Verbindung (A) 5 bis 20 phe ausmacht.

5. Lauffläche nach einem der vorhergehenden Ansprüche, **dadurch gekennzeichnet, dass** das Dienelastomer bzw. die Dienelastomere aus Polybutadienen, Naturkautschuk, synthetischen Polyisoprenen, Butadien-Copolymeren, Isopren-Copolymeren und Mischungen dieser Elastomere ausgewählt ist bzw. sind.

6. Lauffläche nach einem der vorhergehenden Ansprüche, **dadurch gekennzeichnet, dass** der verstärkende Füllstoff bzw. die verstärkenden Füllstoffe aus Kieselsäure, Ruß und einer Mischung davon, vorzugsweise Ruß, ausgewählt ist bzw. sind.

7. Lauffläche nach einem der vorhergehenden Ansprüche, **dadurch gekennzeichnet, dass** der verstärkende Füllstoff bzw. die verstärkenden Füllstoffe in einem Gehalt im Bereich von 20 bis 200 phe, vorzugsweise von 30 bis 150 phe, noch weiter bevorzugt von 40 bis 80 phe, vorliegt bzw. vorliegen.

8. Verfahren zur Herstellung einer Lauffläche gemäß einem der vorhergehenden Ansprüche, **dadurch gekennzeichnet, dass** es die folgenden Schritte umfasst:
a) Einarbeiten der Verbindung (A) und des verstärkenden Füllstoffs bzw. der verstärkenden Füllstoffe in das Dienelastomer bzw. die Dienelastomere durch ein- oder mehrmaliges thermomechanisches Kneten des Ganzen bis zum Erreichen einer Maximaltemperatur im Bereich von 110 °C bis 165 °C, dann
b) Einarbeiten des Vernetzungssystems in die Mischung und Kneten des Ganzen bis zu einer Maximaltemperatur von weniger als 90 °C.

9. Verfahren nach Anspruch 8, **dadurch gekennzeichnet, dass** es außerdem einen Schritt c) des Kalandrierens der am Ende von Schritt b) erhaltenen Mischung umfasst.

10. Reifen mit einer Lauffläche gemäß einem der Ansprüche 1 bis 7.

11. Verwendung der Lauffläche gemäß einem der Ansprüche 1 bis 7 zur Verbesserung der Haftung eines Reifens gemäß Anspruch 10 auf nasser Fahrbahn.

## Claims

1. Tyre tread based on one or more diene elastomers, on one or more reinforcing fillers, on a crosslinking system, **characterized in that** said tread further comprises at least one compound (A) selected from a metal chelate comprising at least one ligand and at least one metal, a pigment and their mixture,
said metal chelate being selected from iron porphyrins, preferably iron porphines, iron hemiporphyrazine, iron hemin, iron phthalocyanines and copper phthalocyanines,
said pigment being selected from diketopyrrolopyrroles, anthraquinones, quinacridones, perylenes and pyrazolo-quinazolones, preferably diketopyrrolopyrroles,
said compound A representing from 1 to 30 phr.

2. Tread according to any one of the preceding claims, **characterized in that** the metal chelate is iron hemin of formula (I) below: 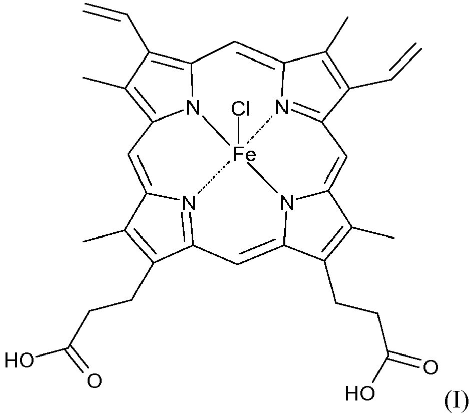 or iron phthalocyanine of formula (II) below:

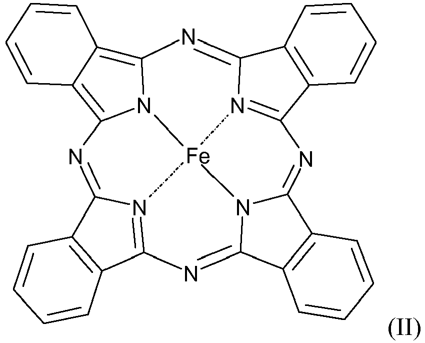

3. Tread according to any one of the preceding claims, **characterized in that** the pigment is selected from Red 254, Red 255 and Red 264, preferably Red 254.

4. Tread according to any one of the preceding claims, **characterized in that** the compound (A) represents from 5 to 20 phr.

5. Tread according to any one of the preceding claims, **characterized in that** the diene elastomer(s) are selected from polybutadienes, natural rubber, synthetic polyisoprenes, butadiene copolymers, isoprene copolymers and the mixtures of these elastomers.

6. Tread according to any one of the preceding claims, **characterized in that** the reinforcing filler(s) are selected from silica, carbon black and their mixture, preferably carbon black.

7. Tread according to any one of the preceding claims, **characterized in that** the reinforcing filler(s) are present at a content ranging from 20 to 200 phr, preferably from 30 to 150 phr, more preferably from 40 to 80 phr.

8. Process for preparing a tread as defined in any one of the preceding claims, **characterized in that** it comprises the following steps:
a) incorporating said compound (A) and the reinforcing filler(s) into the diene elastomer or said diene elastomers, everything being kneaded thermomechanically, once or several times, until a maximum temperature ranging from 110°C to 165°C is reached, then
b) incorporating the crosslinking system into the mixture and kneading everything up to a maximum temperature of less than 90°C.

9. Process according to Claim 8, **characterized in that** it further comprises a step c) of calendering the mixture obtained at the end of step b).

10. Tyre comprising a tread as defined in any one of Claims 1 to 7.

11. Use of the tread as defined in any one of Claims 1 to 7, for improving the grip of a tyre, as defined in Claim 10, on wet roads.
